# EUROPEAN PATENT SPECIFICATION

(11) **EP 3 096 059 B1**
(45) Date of publication and mention of the grant of the patent: **03.07.2019**
(21) Application number: 16001126.8
(22) Date of filing: 18.05.2016
(51) Int. Cl.: F16L 27/08, F16L 27/12

(54) **ROTARY COUPLING**
DREHKUPPLUNG
COUPLAGE ROTATIF

(30) Priority: 19.05.2015 CA 2891757; 20.05.2015 US 201514717104
(43) Date of publication of application: 23.11.2016
(73) Proprietor: Freudenberg Oil & Gas, LLC, Houston TX Texas 77040 (US)
(72) Inventor: Williams, Steve, Burlington, L7R 1V2 (CA); Marincic, Anton, Beamsville, L0R 1B7 (CA); Milanovic, Zvonko, Kirkland, H9J 3Z3 (CA)
(74) Representative: Ripper, Monika Sigrid

(56) References cited:
- FR-A- 696 784
- FR-A- 1 246 290
- GB-A- 2 132 297
- US-A- 3 840 264

## Description

### Field of the Invention

The present concept relates to pipe joints which accommodate pipe expansion and movement and more particularly to rotary joints between adjacent lengths of pipe which are interconnected to form a pipeline for carrying fluids which are under moderate to high pressure and temperature.

### Background of the Invention

Rotary couplings have been used in the oil and gas industry and also in other fluid handling industries for a number of years. Oil pipelines associated with exploration drilling commonly include a series of interconnected sections of steel pipe each of which include a male connecting piece at one end a female connecting piece at the other end. The inlets and outlets to be connected by such pipelines can be at various positions relative to one another. It is not always possible or practical to provide rigid pipelines particularly suited to all applications. FR 1246290A discloses such a rotary coupling.

Consequently it is a common practice to interconnect lengths of pipe of various configurations using a rotary or swivel joint to accommodate dynamic pipe expansion relative axial rotation of adjacent lengths of pipe that can occur.

Rotary couplings often use annular sealing or packing rings axially compressed between adjacent internal radially extended faces of male and female connecting pieces.

In practice the reliability and manoeuvrability of rotary couplings has been an issue and therefore there is a need for a rotary coupling which is extremely reliable under severe conditions while also being easy to manipulate in the field.

### Summary of the Invention

The present concept of a rotary coupling comprising:
a) an annular outer section which includes a female end a threaded portion and a Z-ring relief;
b) a connector pipe which includes a connection end, a shoulder, and a seal end which is inserted into the female end of the outer section;
c) a Z-ring housed with the Z-ring relief and packing seals housed within a packing chamber;
d) a retainer ring threadably received into the threaded portion of outer section, the retainer ring receiving compression screws there-through, the screws for urging a packing end of Z-ring longitudinally against packing seals.

Preferably wherein the seal end of connector pipe includes a packing relief defined by a taper.

The present concept a rotary coupling comprising:
a) an annular outer section which includes a female end, a threaded portion, and a Z-ring relief;
b) a connector pipe which includes a connection end, a shoulder, and a seal end which is inserted into the female end of the outer section;
c) a Z-ring housed within the Z-ring relief and packing seals housed within a packing chamber;
d) a retainer ring threadably received into the threaded portion of outer section, the retainer ring receiving compression screws there-through, wherein in the engaged position the compression screws urging a packing end of Z-ring longitudinally against packing seals thereby compressing the packing seals into the packing chamber creating a seal.

Preferably wherein the compression screws moveable between an engaged and disengaged position such that in the dis- engaged position the compression pressure against the z-ring and packing seals is released by backing off the compression screws without disassembly of the rotary coupling.

Preferably wherein the Z-ring including an inner step portion and an outer step portion wherein the diameter of the inner step less than the diameter of the outer step.

Preferably further including a pipe gap between an abutment and a seal end of connector pipe 104.

Preferably wherein one wall of the packing chamber including the outer diameter of connector pipe 104.

Preferably wherein the seal end of connector pipe includes a packing relief defined by a taper.

Preferably wherein the boundaries of the packing chamber defined by the outer diameter of connector pipe, the packing end of the Z-ring, a chamber bottom and a chamber outer diameter of the outer section.

Preferably wherein the inner diameter of the packing relief is less than the outer diameter D2 of connector pipe 104.

Preferably wherein the taper includes a variation in the outer diameter of the connector pipe D2 and D1 wherein D2 is greater than or equal to D1 wherein D2 is closer to the seal end than D1.

### Brief Description of the Drawings

The present concept will now be described by way of example only with reference to the following drawings in which:
Figure 1 is a partial cross sectional view of a portion of the outer section and the connector pipe together with a Z-ring and a packing seals.
Figure 2 is a partial cross sectional view of a portion of the outer section and the connector pipe together with a Z-ring and a packing seals.
Figure 3 is a schematic cross sectional view showing an outer section together with a connector pipe and the interconnecting pieces.
Figure 4 is a schematic cross sectional perspective view of a rotary coupling showing an outer section together with a connector pipe and the interconnecting pieces.
Figure 5 is anexploded assembly view of the rotary coupling.
Figure 6 is a schematic perspective view of an A-frame configuration shown using three rotary couplings.
Figure 7 is a schematic perspective view of a pipe connection using two rotary couplings.

### Detailed Description of the Preferred Embodiments

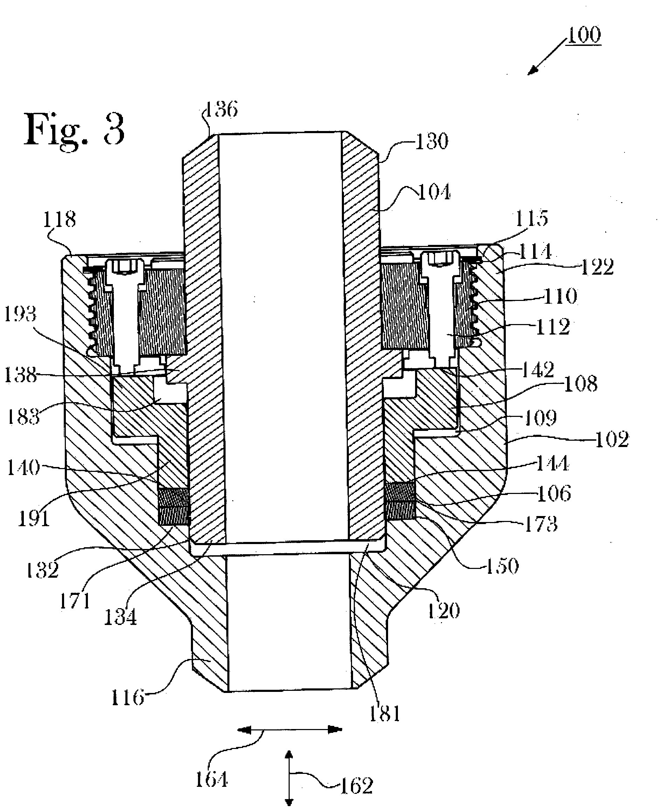

Referring first of all to Figure 3 the present concept a rotary coupling is shown generally as 100 includes the following major components namely outer section 102, connector pipe 104, packing seals 106, Z-ring 108, retainer ring 110, compression screws 112, and snap ring 114.

Outer section 102 includes a male end 116, female end 118 abutments 120 and threaded portion 122. Z-ring 108 includes an inner step portion 191 and an outer step portion 193 wherein the diameter of the inner step less than the diameter of the outer step.

Connector pipe 104 includes an outer diameter D1 130, and outer diameter D2 132, a connector pipe end 134, a connection end 136, a shoulder 138 and a packing relief 140 having an inner diameter 141. Male end 116 and connection end 136 are connected to pipes normally by welding to the ends,

Outer section 102 is machined to accommodate a retainer ring 110 which engages with the threaded portion 122 of outer section 102.

Outer section 102 is furthered shaped with a Z-ring relief 109 to accommodate Z ring 108 as shown in Figure 3. Compression screws 112 thread-ably engage through the retainer ring 110. Z-ring 108 further includes a screw end 142 and a packing end 144.

Outer section 102 together with the seal end 134 of connector pipe 104 as well as the packing end 144 and Z-ring 108 define a packing chamber 150 which is shown in greater detail in Figures and 2. Although not shown in the diagrams Z-ring 108 is machined or designed to accommodate D2 132. This may be accomplished by machining the Z-ring appropriately or using a split ring configuration.

The boundaries of the packing chamber 150 are defined by the outer diameters D1 and/or D2 of connector pipe, the packing end 144 of the Z-ring, a chamber bottom 171 and a chamber outer 173 diameter of the outer section.

In particular a packing relief 140 is defined by a difference in outer diameter of D2 shown as 132 and outer diameter D1 130 of connector pipe104. In practice D2 is greater than D1 thereby creating a taper 160 within seal end 134 of connector pipe 104. Taper 160 may be linear or curved either concave or convex. It is possible that D1 and D2 may be equal i.e. with no taper.

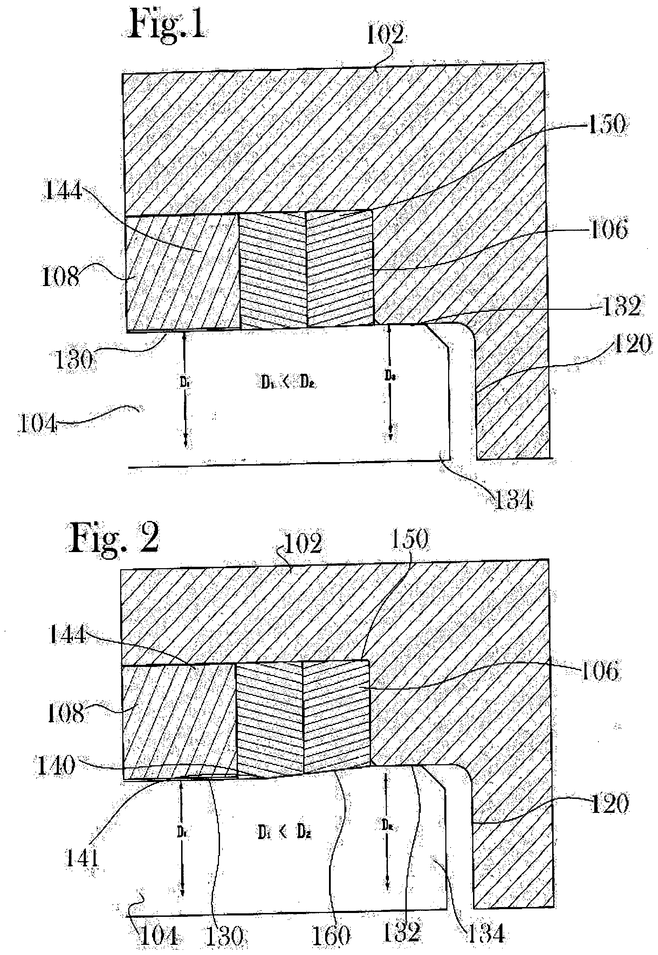

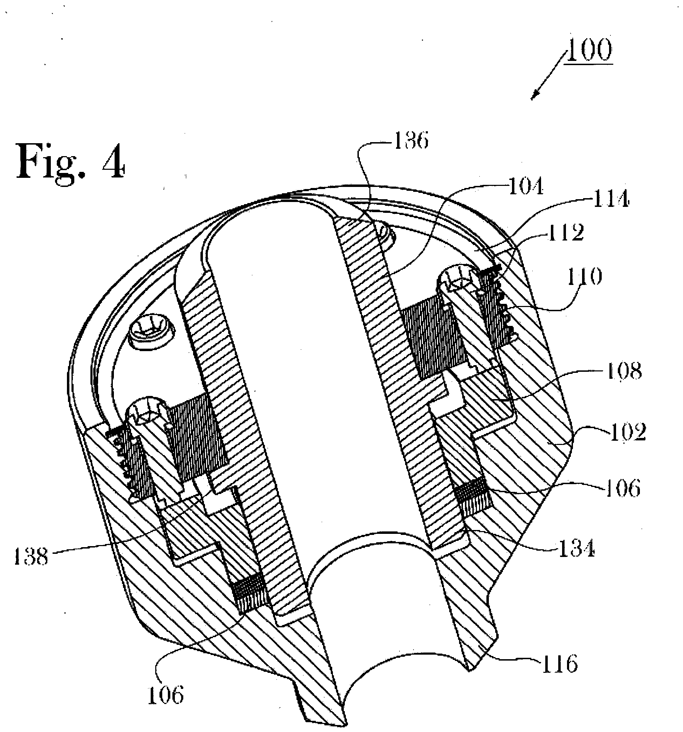

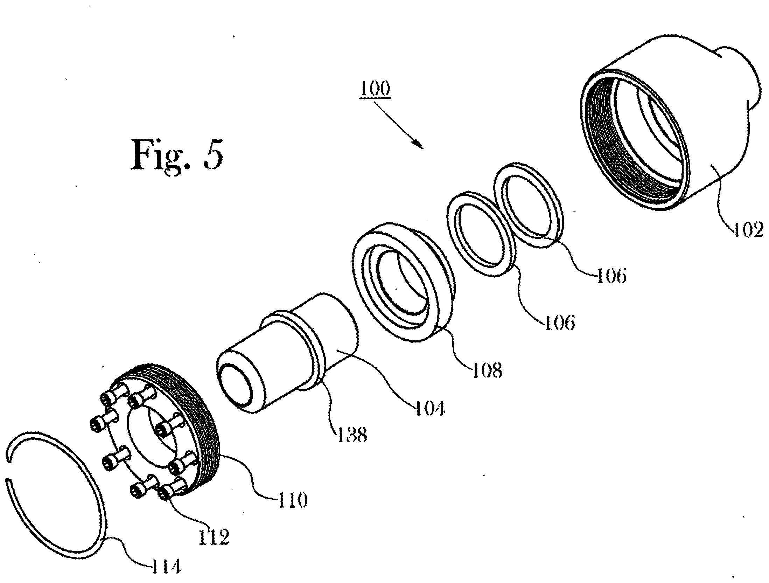

The inventor surprisingly found that the packing relief 140 defined by taper 160 which is developed due to the change in the outer diameter D2 132 to D1 130 creates a substantially superior seal when using compression packing seals 106 of the type shown in Figures 1 through 5.

In use firstly Z-ring 108 is placed onto seal end 134 of connector pipe 104 followed by one or more annular packing seals 106.

Thereafter connector pipe 104 slips into female end 118 of outer section 102 followed by retainer ring 110 which is thread-ably received by threaded portion 122. Thereafter compression screws 112 are thread-ably engaged into retainer ring 110 and finally annular snap ring 114 is placed into ring groove 115.

Annular packing seals 106 are compressed by the thread-ably engaging compression screws 112 which abut against screw end 142 of Z-ring 108 which in turn abuts against packing seals 106 at packing end 144 of Z-ring 108. An advantage in the current design is the ability to tighten engage and loosen disengage compression screws 112. For example compression screws 112 could be tightened in place for pressure testing of the joint and then subsequently loosened for shipping an A-frame configuration 200 in a collapsed position and after on site installation retightening the compression screws 112.

By using the Z-ring 108 configuration one is able to locate the packing seals 106 as close as possible to the outer diameter of connector pipe 104, thereby reducing overall joint torque resistance. In comparison to ball and socket joints the present rotary joint 100 creates less rotational resistance even when compression screws 112 are fully engaged. In other words it takes significantly less torque to rotate rotary joint 100 than an ball and socket joint in the same application.

Further by utilizing a packing relief 140 namely by machining in a taper 160 wherein outer diameter D2 132 is greater than outer diameter D1 130 of connector pipe 104. This packing chamber 150 geometry improves seal performance.

In this manner annular packing seals 106 are compressed not only in the longitudinal direction 162 but there is also some movement or urging of the annular packing seal in the lateral direction 164 against the outer diameter D2 132 of connector pipe 104.

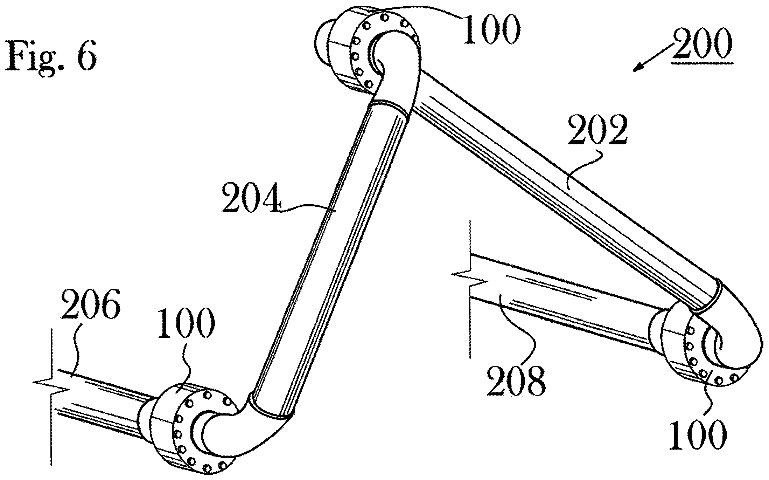

Referring now to Figure 6 which depicts an A frame configuration shown generally as 200 which includes the following components namely three rotary couplings 100, a joiner pipe 202, joiner part 204, inlet pipe 206, outlet pipe 208, and connector 210. The A frame configuration 200 depicted in Figure 6 can be used to compensate for thermal expansion and movement of interconnected piping.

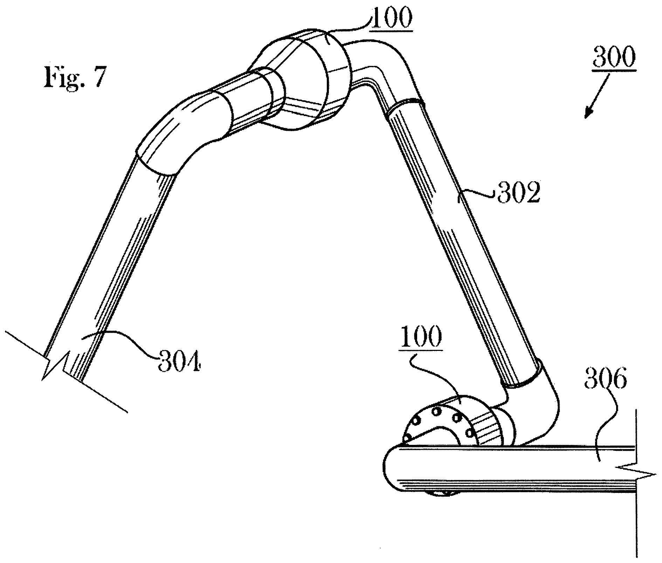

Referring now to Figure 7 which depicts a two coupling configuration 300 include the following components namely: joiner pipe 302, inlet pipe 304, outlet pipe 306 and two rotary couplings 100.

In practice A frame configuration 200 and/or two coupling configuration 300 may be used in order to accommodate thermal expansion contraction and movement of interconnecting pipes in a piping system.

Some of the advantages of the rotary coupling are as follows.
The rotary coupling can be adjusted to relieve the load on the packing member while not affecting the length & orientation of inner or outer section by backing off the compression screws.
The rotary coupling can be adjusted to compensate for seal degradation over time while not affecting the length & orientation of the inner or outer sections by tightening the compression screws
The rotary coupling uses a packing relief 140 in seal end 134 of connector pipe 104 to create a pressure activated seal from the internal media pressure.
The rotatory coupling uses compression packing to create an internal seal containing hot and corrosive media. This is possible through careful selection of material for packing seals 106. The simple annular ring shape and design of packing seals allows a multitude of different materials to be used for packing seals 106.
The rotary coupling employs an offset gland ring or Z-ring 108 to allow for a packing chamber 150 as close as possible to the OD of connector pipe 104.
The rotary coupling provides a smooth internal flow path with allowing a full 360 degree of rotation between the connector pipe 104 and outer section 102 for pipe sizes larger than 2".
The rotary coupling arranged in such a manner to allow for thermal growth between two ends of a system by providing a pipe gap 181 and a shoulder gap 183.

## Claims

1. A rotary coupling comprising:
a) an annular outer section (102) which includes a female end (118), a threaded portion (122), and a Z-ring relief (109);
b) a connector pipe (104) which includes a connection end (136), a shoulder (138), and a seal end (134) which is inserted into the female end (118) of the annular outer section (102);
c) a Z-ring (108) housed within the Z-ring relief (109) and packing seals (106) housed within a packing chamber (150);
d) a retainer ring (110) threadably received into the threaded portion (122) of the annular outer section (102), the retainer ring (110) receiving compression screws (112) there-through, wherein in the engaged position the compression screws (112) urging a packing end (144) of the Z-ring (108) longitudinally against the packing seals (106) thereby compressing the packing seals (106) into the packing chamber (150) creating a seal.

2. The rotary coupling claimed in claim 1 wherein the compression screws are moveable between an engaged and disengaged position such that in the disengaged position the compression pressure against the z-ring and the packing seals is released by backing off the compression screws without disassembly of the rotary coupling.

3. The rotary coupling claimed in claim 1 wherein the Z-ring includes an inner step portion (191) and an outer step portion (193) wherein the diameter of the inner step is less than the diameter of the outer step.

4. The rotary coupling claimed in claim 1 further including a pipe gap (181) between an abutment and a seal end of the connector pipe (104).

5. The rotary coupling claimed in claim 1 wherein one wall of the packing chamber includes an outer diameter of the connector pipe (104).

6. The rotary coupling claimed in claim 1 wherein the seal end of the connector pipe includes a packing relief (140) defined by a taper (160).

7. The rotary coupling claimed in claim 1 wherein the boundaries of the packing chamber are defined by an outer diameter of the connector pipe, the packing end of the Z-ring, a chamber bottom and a chamber outer diameter of the outer annular section (102).

8. The rotary coupling claimed in claim 6 wherein an inner diameter of the packing relief is less than the outer diameter D2 of connector pipe (104).

9. The rotary coupling claimed in claim 6 wherein the taper includes a variation D2 and D1 in the outer diameter (132, 130) of the connector pipe (104) wherein D2 is greater than or equal to D1 and wherein D2 is closer to the seal end than D1.

## Patentansprüche

1. Drehkupplung, umfassend:
a) einen ringförmigen Außenabschnitt (102), der ein weibliches Ende (118), einen Gewindeabschnitt (122) und eine Z-Ring-Aussparung (109) umfasst,
b) ein Verbindungsrohr (104), das ein Verbindungsende (136), eine Schulter (138) und ein Dichtungsende (134) umfasst, das in das weibliche Ende (118) des ringförmigen Außenabschnitts (102) eingesetzt ist,
c) einen Z-Ring (108), der in der Z-Ring-Aussparung (109) untergebracht ist, und Dichtpackungen (106), die in einer Dichtkammer (150) untergebracht sind,
d) einen Haltering (110), der schraubbar in dem Gewindeabschnitt (122) des ringförmigen Außenabschnitts (102) aufgenommen ist, wobei der Haltering (110) Kompressionsschnecken (112) durch denselben aufnimmt, wobei die Kompressionsschnecken (112) in der Eingriffsstellung ein Dichtende (144) des Z-Rings (108) in Längsrichtung gegen die Dichtpackungen (106) drängt, wodurch die Dichtpackungen (106) unter Schaffung einer Dichtung in die Dichtkammer (150) komprimiert werden.

2. Drehkupplung nach Anspruch 1, wobei die Kompressionsschnecken auf eine solche Weise zwischen einer Eingriffsstellung und einer Nichteingriffsstellung bewegbar sind, dass der gegen den Z-Ring und die Dichtpackungen herrschende Kompressionsdruck in der Nichteingriffsstellung abgebaut wird, indem die Kompressionsschnecken ohne Demontage der Drehkupplung zurückgeschraubt werden.

3. Drehkupplung nach Anspruch 1, wobei der Z-Ring einen inneren Stufenabschnitt (191) und einen äußeren Stufenabschnitt (193) umfasst, wobei der Durchmesser der inneren Stufe geringer als der Durchmesser der äußeren Stufe ist.

4. Drehkupplung nach Anspruch 1, ferner umfassend einen Rohrspalt (181) zwischen einem Auflager und einem Dichtungsende des Verbindungsrohrs (104).

5. Drehkupplung nach Anspruch 1, wobei eine Wand der Dichtkammer einen Außendurchmesser des Verbindungsrohrs (104) umfasst.

6. Drehkupplung nach Anspruch 1, wobei das Dichtungsende des Verbindungsrohrs eine durch eine Abschrägung (160) definierte Dichtaussparung (140) umfasst.

7. Drehkupplung nach Anspruch 1, wobei die Grenzen der Dichtkammer durch einen Außendurchmesser des Verbindungsrohrs, das Dichtende des Z-Rings, einen Kammerboden und einen Kammeraußendurchmesser des ringförmigen Außenabschnitts (102) definiert sind.

8. Drehkupplung nach Anspruch 6, wobei ein Innendurchmesser der Dichtaussparung geringer als der Außendurchmesser D2 des Verbindungsrohrs (104) ist.

9. Drehkupplung nach Anspruch 6, wobei die Abschrägung eine Änderung D2 und D1 des Außendurchmessers (132, 130) des Verbindungsrohrs (104) umfasst, wobei D2 größer oder gleich D1 ist und wobei D2 näher an dem Dichtungsende als D1 gelegen ist.

## Revendications

1. Couplage rotatif, comprenant:
a) une section extérieure annulaire (102) qui présente une extrémité femelle (118), une partie filetée (122) et un dégagement pour anneau en Z (109);
b) un tuyau de connecteur (104) qui présente une extrémité de connexion (136), un épaulement (138) et une extrémité d'étanchéité (134), qui est inséré dans l'extrémité femelle (118) de la section extérieure annulaire (102);
c) un anneau en Z (108) logé à l'intérieur du dégagement pour anneau en Z (109) et des joints de bourrage (106) logés à l'intérieur d'une chambre de bourrage (150);
d) une bague de retenue (110) reçue de façon vissée dans la partie filetée (122) de la section extérieure annulaire (102), la bague de retenue (110) recevant des vis de compression (112) à travers celle-ci, dans lequel, dans la position engagée, les vis de compression (112) poussent une extrémité de bourrage (144) de l'anneau en Z (108) de façon longitudinale contre les joints de bourrage (106), compriment de ce fait les joints de bourrage (106) dans la chambre de bourrage (150), créant un joint étanche.

2. Couplage rotatif selon la revendication 1, dans lequel les vis de compression sont déplaçables entre une position engagée et une position désengagée, de telle sorte que, dans la position désengagée, la pression de compression contre l'anneau en Z et les joints de bourrage soit relâchée en supprimant l'appui des vis de compression sans désassembler le couplage rotatif.

3. Couplage rotatif selon la revendication 1, dans lequel l'anneau en Z comprend une partie de gradin intérieur (191) et une partie de gradin extérieur (193), dans lequel le diamètre du gradin intérieur est inférieur au diamètre du gradin extérieur.

4. Couplage rotatif selon la revendication 1, comprenant en outre un espace de tuyau (181) entre une butée et une extrémité d'étanchéité du tuyau de connecteur (104).

5. Couplage rotatif selon la revendication 1, dans lequel une paroi de la chambre de bourrage comprend un diamètre extérieur du tuyau de connecteur (104).

6. Couplage rotatif selon la revendication 1, dans lequel l'extrémité d'étanchéité du tuyau de connecteur comprend un dégagement de bourrage (140) défini par une conicité (160).

7. Couplage rotatif selon la revendication 1, dans lequel les limites de la chambre de bourrage sont définies par un diamètre extérieur du tuyau de connecteur, l'extrémité de bourrage de l'anneau en Z, un fond de chambre et un diamètre extérieur de chambre de la section extérieure annulaire (102).

8. Couplage rotatif selon la revendication 6, dans lequel le diamètre intérieur du dégagement de bourrage est inférieur au diamètre extérieur D2 du tuyau de connecteur (104).

9. Couplage rotatif selon la revendication 6, dans lequel la conicité comprend une différence entre D2 et Dl dans le diamètre extérieur (132, 130) du tuyau de connecteur (104), dans lequel D2 est supérieur ou égal à Dl, et dans lequel D2 est plus proche de l'extrémité d'étanchéité que D1.
